# EUROPÄISCHE PATENTANMELDUNG

(11) **EP 1 176 238 A1**
(43) Veröffentlichungstag der Anmeldung: **30.01.2002**
(21) Anmeldenummer: 01112500.2
(22) Anmeldetag: 22.05.2001
(51) Int. Cl.: D03D 11/00, D03D 9/00, A01G 13/02

(54) **Kunststoffmaschengewebe für den Einsatz in der Landwirtschaft**

(30) Priorität: 23.05.2000 DE 20009247 U
(71) Anmelder: Jenq Long Plastic Industry Co., Ltd., Fu Shin Hsiang, Chang Hua Hsien (TW)
(72) Erfinder: Wu, Tsung-Chin, c/o Jeng Long Plastics Industry Co, Fu Shing Hsiang, Chang Hua Hsien (TW)
(74) Vertreter: Kuhnen & Wacker

(57) **Zusammenfassung**

Die Erfindung betrifft ein Kunststoffmaschengewebe für den Einsatz in der Landwirtschaft, das drei Lagen aufweist und mit einer Webmaschine, die mit zusätzlichen Harnischen und Litzen ergänzt ist, durch Flachweben derart hergestellt ist, daß die drei Lagen an den beiden Seiten zusammengewebt und im Mittelbereich getrennt sind, wobei die erste Lage entlang einer Verbindungsstelle (S) und die dritte Lage entlang der gegenüberliegenden Verbindungsstelle (S) durchgeschnitten werden kann, so daß das dreilagige Maschengewebe ausgebreitet werden und ein langes einlagiges Maschengewebe bilden kann, das an den Verbindungsstellen verbunden ist.

## Beschreibung

Die Erfindung betrifft ein Kunststoffmaschengewebe gemäß dem Oberbegriff des Anspruchs 1, das in der Landwirtschaft eingesetzt wird und zum Schutz von Kulturpflanzen vor Sonnenschein und Schädlingen dient.

Ein herkömmliches Maschengewebe, das in der Landwirtschaft eingesetzt wird, weist üblicherweise durch Nähen miteinander verbundene Bahnen auf, um so die Breite zu vergrößern. Da das Maschengewebe in der Regel aus Kunststoffasem und mittels Flachweben hergestellt wird, kann die Naht wegen der Kantenausfransung des Maschengewebes platzen bzw. aufgehen, so daß sich die Verbindung des Maschengewebes löst.

Der Erfindung liegt daher die Aufgabe zugrunde, ein Kunststoffmaschengewebe für den Einsatz in der Landwirtschaft zu schaffen, dessen Verbindungsweise dadurch verbessert wird, daß die Verbindung bereits beim Weben hergestellt wird, wodurch keine Nacharbeit erforderlich ist und eine Zeit- und Krafteinsparung erzielt werden kann.

Diese Aufgabe wird erfindungsgemäß durch ein Kunststoffmaschengewebe mit den Merkmalen des Anspruchs 1 und insbesondere dadurch gelöst, daß das Maschengewebe drei Lagen (oder mehr) aufweist und mit einer Webmaschine, die mit zusätzlichen Harnischen und Litzen ergänzt ist, durch Flachweben derart hergestellt ist, daß die drei Lagen an den beiden Seiten zusammengewebt und im Mittelbereich getrennt sind, wobei die ungeradzahlige Lage (1, 3, 5...) entlang einer Verbindungsstelle durchgeschnitten werden kann (wenn die erste Lage entlang der linken Verbindungsstelle durchgeschnitten wird, wird die dritte Lage entlang der rechten Verbindungsstelle durchgeschnitten), so daß das Maschengewebe ausgebreitet werden und ein langes einlagiges Maschengewebe bilden kann, das an den Verbindungsstellen verbunden ist. Beim erfindungsgemäßen Maschengewebe besteht keine Gefahr der Lösung der Verbindung, da die Verbindung durch Weben hergestellt ist, und es erfordert keine Nacharbeit, da das Maschengewebe durch Verstellung der Webmaschine in einem Webvorgang hergestellt werden kann.

Eine vorteilhafte Weiterbildung der Erfindung ist Gegenstand des Anspruchs 2.

Im folgenden wird die Erfindung anhand eines Ausführungsbeispiels und der beigefügten Figuren der Zeichnung näher erläutert. Es zeigt:
- Fig. 1: eine Seitenansicht des erfindungsgemäßen Maschengewebes vor dem Durchschneiden,
- Fig. 2: eine Seitenansicht des erfindungsgemäßen Maschengewebes nach dem Durchschneiden,
- Fig. 3: eine perspektivische Darstellung des erfindungsgemäßen Maschengewebes im ausgebreiteten Zustand.

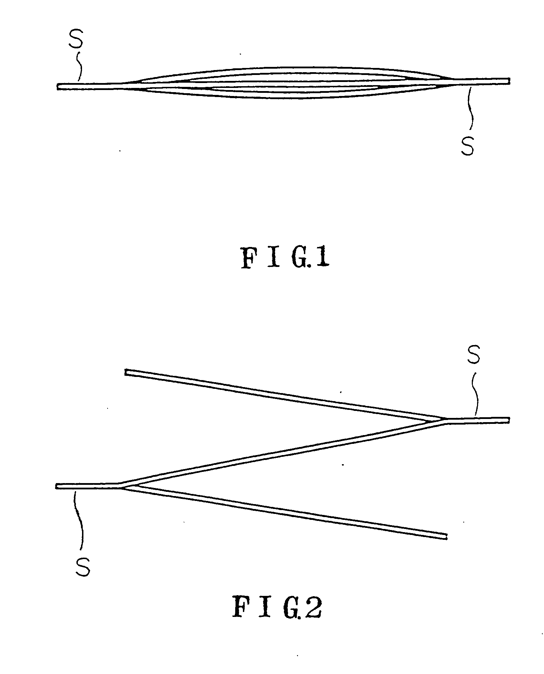

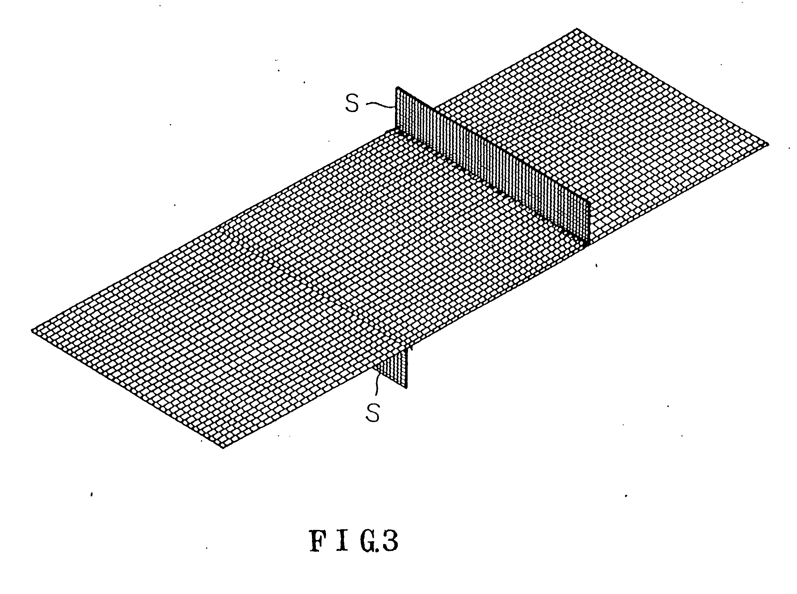

Wie aus den Fig. 1 bis 3 ersichtlich ist, ist das erfindungsgemäße Kunststoffmaschengewebe für den Einsatz in der Landwirtschaft dreilagig ausgebildet, wobei die drei Lagen an den beiden Seiten zusammengewebt und im Mittelbereich getrennt sind. Das erfindungsgemäße Maschengewebe ist mit einer Webmaschine, die mit zwei Harnischen und zwei Litzen ergänzt ist, durch Flachweben hergestellt, wobei die Länge des Maschengewebes je nach Bedarf veränderbar ist. An beiderseitigen Verbindungsstellen (S) der drei Lagen sind die Kette und der Schuß dichter gekreuzt als im Mittelbereich, während der Mittelbereich der drei Lagen getrennt und versetzt gewebt ist. Wenn die erste Lage entlang einer Verbindungsstelle (S) und die dritte Lage entlang der gegenüberliegenden Verbindungsstelle (S) durchgeschnitten wird, kann das dreilagige Maschengewebe ausgebreitet werden und ein langes einlagiges Maschengewebe bilden, ohne daß die Gefahr der Lösung der Verbindung besteht.

Das erfindungsgemäße Kunststoffmaschengewebe ist somit mit geringem Aufwand herstellbar, allgemein verfügbar und zeichnet sich gegenüber dem Stand der Technik durch verbesserte Eigenschaften aus.

Die Erfindung betrifft also ein Kunststoffmaschengewebe für den Einsatz in der Landwirtschaft, das drei Lagen aufweist und mit einer Webmaschine, die mit zusätzlichen Harnischen und Litzen ergänzt ist, durch Flachweben derart hergestellt ist, daß die drei Lagen an den beiden Seiten zusammengewebt und im Mittelbereich getrennt sind, wobei die erste Lage entlang einer Verbindungsstelle (S) und die dritte Lage entlang der gegenüberliegenden Verbindungsstelle (S) durchgeschnitten werden kann, so daß das dreilagige Maschengewebe ausgebreitet werden und ein langes einlagiges Maschengewebe bilden kann, das an den Verbindungsstellen verbunden ist.

## Patentansprüche

1. Kunststoffmaschengewebe für den Einsatz in der Landwirtschaft, das wenigstens drei Lagen aufweist und mit einer Webmaschine, die mit zusätzlichen Harnischen und Litzen ergänzt wird, durch Flachweben derart hergestellt ist, daß die drei Lagen an den beiden Seiten zusammengewebt und im Mittelbereich getrennt sind, **dadurch gekennzeichnet, daß** an beiderseitigen Verbindungsstellen (S) der drei Lagen die Kette und der Schuß dichter gekreuzt sind als im Mittelbereich, während der Mittelbereich der drei Lagen getrennt und versetzt gewebt ist, wobei die erste Lage entlang einer Verbindungsstelle (S) und die dritte Lage entlang der gegenüberliegenden Verbindungsstelle (S) durchgeschnitten werden kann, so daß das dreilagige Maschengewebe ausgebreitet werden und ein langes einlagiges Maschengewebe bilden kann, das an den Verbindungsstellen (S) verbunden ist.

2. Kunststoffmaschengewebe nach Anspruch 1, **dadurch gekennzeichnet, daß** das Maschengewebe mehr als drei Lagen aufweist, die an den beiden Seiten zusammengewebt und im Mittelbereich getrennt sind.
